# EUROPÄISCHE PATENTANMELDUNG

(11) **EP 4 810 461 A2**
(43) Veröffentlichungstag der Anmeldung: **23.09.2026**
(21) Anmeldenummer: 26196749.1
(22) Anmeldetag: 18.05.2022
(51) Int. Cl.: C05G 5/12

(54) **VERFAHREN UND VORRICHTUNG ZUR HERSTELLUNG VON DÜNGEMITTELGRANULAT**

(30) Priorität: 01.06.2021 DE 102021205596
(62) Dokumentnummer(n) der früheren Anmeldung(en) nach Art. 76 EPÜ: 22730150.4 / 4 347 534
(71) Anmelder: Glatt Ingenieurtechnik Gessellschaft Mit Beschränkter Haftung, 99427 Weimar (DE)
(72) Erfinder: Jacob, Dr. Michael, 99425 Weimar (DE); Johannes, Dr. Buchheim, 07749 Jena (DE)
(74) Vertreter: Patentanwälte Magenbauer & Kollegen Partnerschaft mbB

(57) **Zusammenfassung**

Die Erfindung betrifft ein Verfahren und eine Vorrichtung (1) zur Herstellung von Düngemittelgranulat (43) aus einem aufbereiteten als Verbrennungsrückstand ausgebildeten Ausgangsstoff (7) und einem Reaktionsmittel (27) mittels Granulation.

## Beschreibung

Die Erfindung betrifft eine Vorrichtung zur Herstellung von Düngemittelgranulat aus einem aufbereiteten als Verbrennungsrückstand ausgebildeten Ausgangsstoff und einem Reaktionsmittel mittels Granulation.

Die landwirtschaftliche Nutzung der Böden entzieht diesen mineralische Rohstoffe wie beispielsweise phosphorhaltige Verbindungen. Diese sind den Böden für eine weitere landwirtschaftliche Nutzung durch künstliche, mineralische Düngemittel erneut zuzuführen, wobei die mineralischen Rohstoffe vorteilhafterweise und unter Nachhaltigkeitsgesichtspunkten aus bisher nur bedingt genutzten Rohstoffquelle bezogen.

Den hergestellten Düngemittelgranulaten ist allen gemein, dass sie den Anforderungen an die Düngemittelverordnung (DüMV) genügen müssen, insbesondere auch hinsichtlich einer Schadstoffbelastung, insbesondere einer Schwermetallbelastung.

Entsprechende Verfahren und Vorrichtungen zur Herstellung von Düngemitteln sind seit langem Stand der Technik und werden nachfolgend kurz zusammengefasst:
Die europäische Patentanmeldung EP 3 037 396 A1 offenbart ein Verfahren zur Herstellung eines phosphathaltigen Düngemittels aus einer Asche oder einem Verkohlungsrückstand eines Schlamms aus einer Abwasserreinigung oder Abfallvergärung durch a) Vermischen der Asche oder des Verkohlungsrückstands mit einer mineralischen Säure und Inkubation der resultierenden Suspension in einem ersten Gefäß, b) Absondern von feuchten Feststoffen aus der Suspension und Ersetzen der abgesonderten Feststoffe durch weitere Asche oder weiteren Verkohlungsrückstand, Vermischen der weiteren Asche oder des weiteren Verkohlungsrückstands mit der in dem ersten Gefäß verbleibenden mineralischen Säure und Inkubation der resultierenden Suspension in dem ersten Gefäß, c) Überführen dieser Feststoffe in ein zweites Gefäß und Vermischen der Feststoffe mit einer pH-neutralen, basischen oder gepufferten wässrigen Flüssigkeit, d) Absondern eines Teils der durch das Vermischen entstandenen Flüssigkeit aus dem zweiten Gefäß, Abtrennen darin enthaltener Schwermetallionen und Rückführen dieser Flüssigkeit in das zweite Gefäß, e) Absondern von feuchten Feststoffen aus der im zweiten Gefäß enthaltenen Flüssigkeit und f) Wiederholen der Schritte b) bis f). Im Anschluss daran wird die entstandene Mischung in der Konditioniereinheit pilliert.

Die deutsche Patentanmeldung DE 10 2016 116 633 A1 beschreibt ein Verfahren zur Herstellung von Düngemittelgranulat, wobei eine Suspension mindestens aus einem phosphathaltigen Sekundärrohstoff und mindestens einer Mineralsäure erzeugt wird, in der erzeugten Suspension die schwerlöslichen Phosphate des mindestens einen phosphathaltigen Sekundärrohstoffes zumindest teilweise gelöst und/oder in eine wasser- und/oder neutral-ammoniumcitratlösliche Phosphatphase umgewandelt werden und diese Suspension anschließend einer Granulation zugeführt wird, wobei sich das Düngemittelgranulat bildet und wobei der enthaltene P2O5-Gehalt im Düngemittelgranulat größer 75 % neutral-ammoniumcitratlöslich ist und außerdem von einem Düngemittelgranulat mit einem sphärischen Formfaktor von größer gleich 0,85, mit einer Granulatgrößenverteilung im Bereich von 1 mm (d05) bis 10mm (d95) und einem P2O5-Anteil größer 8 %, wobei der P2O5-Gehalt größer 75 % neutral-ammoniumcitratlöslich ist.

In der internationalen Patentanmeldung WO 2019/149405 A1 wird ein Verfahren zur Herstellung eines pedosphärenverbessernden Granulats sowie die dazugehörige Vorrichtung und ein über das Verfahren gewonnenes Granulat gezeigt. Hierbei verfügt das Verfahren über die Verfahrensschritte a) der Erzeugung einer Rohstoffdispersion umfassend mindestens ein anorganisches Sekundärphosphat und mindestens ein Reaktionsmittel, wobei der Anteil an einer flüssigen Phase in der Rohstoffdispersion größer 30 % ist, bei einer Inkubationszeit zwischen anorganischem Sekundärphosphat und Reaktionsmittel zwischen 1 bis 100 Minuten, b) der Abtrennung eines Teils der flüssigen Phase der Rohstoffdispersion, c) der Granulierung und/oder Extrusion der verbleibenden Rohstoffdispersion mit reduzierter flüssiger Phase, d) entweder der Rückführung der im Prozessschritt b) abgetrennten flüssigen Phase ohne zumindest teilweise Schwermetallabtrennung in den Prozessschritt a) zur Herstellung einer Rohstoffdispersion oder zumindest teilweises Absondern von Schwermetallen aus der im Prozessschritt b) abgetrennten flüssigen Phase sowie Ausschleusung dieser Schwermetalle aus dem Prozess mit anschließender Rückführung der schwermetallarmen abgetrennten flüssige Phase zur Herstellung einer Rohstoffdispersion analog Prozessschritt a) und/oder in den Prozessschritt c) und e) Wiederholen der Prozessschritte a) bis d).

Nachteilig an den im Stand der Technik beschriebenen Verfahren ist, dass durch die Reaktion zwischen den als Verbrennungsrückständen ausgebildeten Ausgangsstoffen und dem Reaktionsmittel neben den als Schwermetallen ausgebildeten Schadstoffen auch ein wesentlicher Teil an Phosphaten aus den Ausgangsstoffen herausgelöst wird und somit nur noch bedingt zur Herstellung des Düngemittelgranulats nutzbar ist.

Die europäische Patentanmeldung EP 3 293 165 A1 offenbart ein Verfahren zur Herstellung von Düngemittelgranulat, wobei eine Suspension mindestens aus einem phosphathaltigen Sekundärrohstoff und mindestens einer Mineralsäure erzeugt wird, in der erzeugten Suspension die schwerlöslichen Phosphate des mindestens einen phosphathaltigen Sekundärrohstoffes zumindest teilweise gelöst und/oder zumindest teilweise in eine wasser- und/oder neutral-ammoniumcitratlösliche Phosphatphase umgewandelt werden und diese Suspension anschließend einer Granulation zugeführt wird, wobei sich das Düngemittelgranulat bildet und wobei der enthaltene P2O5-Gehalt im Düngemittelgranulat größer 75 % neutral-ammoniumcitratlöslich ist sowie einem alternativen Verfahren zur Herstellung von Düngemittelgranulat, wobei ein Spray in einer Granulationsvorrichtung mindestens aus mindestens einem phosphathaltigen Sekundärrohstoff und mindestens einer Mineralsäure durch Verdüsen erzeugt wird, und in dem Spray die schwerlöslichen Phosphate des mindestens einen phosphathaltigen Sekundärrohstoffes zumindest teilweise gelöst und/oder zumindest teilweise in eine wasser- und/oder neutral-ammoniumcitratlösliche Phosphatphase umgewandelt werden und wobei sich anschließend in der Granulationsvorrichtung das Düngemittelgranulat bildet.

Die internationale Patentanmeldung WO 2020/192958 A1 offenbart schwermetallabgereicherte Düngergranulate aus Sekundärphosphat und Verfahren zu deren Herstellung.

Die europäische Patentanmeldung EP 3 772 503 A1 betrifft ein Verfahren zur Erstellung von Düngemittelgranulat, wobei zuerst eine Suspension aus einem phosphathaltigen Rohstoff und einer Säure in einer Reaktoreinheit erzeugt und diese danach einem Granulat dazu Granulation zugeführt wird, und wobei die in der Reaktoreinheit erzeugte Suspension vor der Granulation in der Reaktoreinheit rezirkuliert wird.

In der europäischen Patentanmeldung EP 2 792 949 A2 wird ein Verfahren zur Gewinnung von phosphorhaltigen Verbindungen aus Klärschlamm offenbart, wobei das Verfahren die folgenden Schritte umfasst: a) Verbrennung des Klärschlamms zu einer Asche; b) mechanische Klassierung der Asche zur Selektierung einer Aschefraktion mit einer Partikelgröße unterhalb einer vorgebbaren Maximalpartikelgröße; und c) Behandlung der selektierten Aschefraktion zur Gewinnung von Phosphorhaltigen Verbindungen.

Aufgabe der Erfindung ist es daher eine alternative Vorrichtung zur Herstellung von Düngemittelgranulaten bereitzustellen, wobei ein wesentlich größerer Teil der Phosphate zur Herstellung des Düngemittelgranulates nutzbar gemacht wird.

Bei einem Verfahren zur Herstellung von Düngemittelgranulat wird in einer Aufbereitungsphase eine erste Suspension aus dem Ausgangsstoff und einem Lösungsmittel hergestellt, wodurch in der ersten Suspension im Ausgangsstoff gebundene Schadstoffe, insbesondere Schwermetalle, durch das Lösungsmittel zumindest teilweise aus dem Ausgangsstoff herausgelöst werden, um dann zur Gewinnung eines Raffinats das Extrakt zumindest teilweise von der ersten Suspension abzutrennen, um in einer sich an die Aufbereitungsphase anschließenden Herstellungsphase eine zweite Suspension aus dem Raffinat und dem Reaktionsmittel herzustellen, die dann nach einer Reaktionszeit granuliert wird, wobei die zweite Suspension mittels Sprühgranulation oder Sprühagglomeration granuliert wird. Vorteilhafterweise wird in der Aufbereitungsphase beim Extrahieren der insbesondere als Schwermetall ausgebildeten Schadstoffe durch das Lösungsmittel aus dem als Verbrennungsrückstand ausgebildeten Ausgangsstoff zumindest das im Ausgangsstoff schwerlöslich gebundene Phosphat nicht gelöst und verbleibt in diesem. Die im Raffinat verbleibenden Phosphate können somit in der sich an die Aufbereitungsphase anschließenden Herstellungsphase in wesentlich größerem Umfang in das Düngemittelgranulat eingebracht werden. Die Granulation der zweiten Suspension wird mittels Sprühgranulation oder Sprühagglomeration durchgeführt. Diese erfolgt zweckmäßigerweise insbesondere in einem als Wirbelschicht- oder Strahlschichtapparat ausgebildeten Fluidisierungsapparat. Vorteilhafterweise werden hierdurch die Düngemittelgranulate hergestellt, deren Eigenschaften, wie Korngröße, Feuchtegehalt usw., gezielt einstellbar sind oder eingestellt werden. In einer diesbezüglich vorteilhaften Ausführung des Verfahrens wird die zweite Suspension kontinuierlich granuliert.

Nach einer diesbezüglich vorteilhaften Ausgestaltung des Verfahrens wird in einem Regenerationsschritt das in der Aufbereitungsphase zumindest teilweise von der ersten Suspension abgetrennte Extrakt regeneriert und zur Herstellung der ersten Suspension rezirkuliert. Hierdurch wird der Lösungsmittelverbrauch deutlich gesenkt, wodurch das Verfahren zur Herstellung von Düngemittelgranulaten effizienter und kostensparender wird. Bevorzugt erfolgt die Regeneration des Extrakts mittels Ionenselektion und/oder Fällung und/oder Extraktion und/oder einem Schritt umfassend eine Verdampfung/Destillation und/oder elektrochemischer Aufreinigung. Besonders bevorzugt erfolgt die Fällung als Sulfidfällung unter Verwendung von Thiosulfat-Salzen. Die Sulfidfällung durch Verwendung von Thiosulfat-Salzen weist den Vorteil auf, dass das Entstehen von nur durch einen sehr großen Apparateaufwand wieder abreinigbaren Schwefelgasen verhindert wird. Weiter bevorzugt erfolgt die Abscheidung durch elektrochemische Aufreinigung mittels eines Platin-Graphit-Elektrodenpaars.

Zweckmäßigerweise wird die Aufbereitungsphase mit einem als Raffinat ausbildeten Ausgangsstoff einmal oder mehrmals wiederholt. Durch eine solche Aufbereitungskaskade erfolgt eine vollständigere Extraktion der Schadstoffe, insbesondere der Schwermetalle, aus dem Ausgangsstoff, sodass die die Schadstoffkonzentration im Raffinat mit jeder Aufbereitungsphase sinkt. Bevorzugt werden in unterschiedlichen Aufbereitungsphasen unterschiedliche Lösungsmittel eingesetzt. Durch die unterschiedlichen Lösungsmittel ist es möglich die verschiedenen im Ausgangsstoff gebundenen Schadstoffe unterschiedlich gut zu extrahieren, da die gebundenen Schadstoffe ihren Eigenschaften entsprechend durch unterschiedliche Lösungsmittel unterschiedlich gut aus dem Ausgangsstoff herausgelöst und im Lösungsmittel adsorbiert werden.

Entsprechend einer zusätzlichen vorteilhaften Ausgestaltung des Verfahrens werden der ersten Suspension und/oder der zweiten Suspension Additive zugeführt. Als Additive gelten insbesondere Phosphor, Schwefel und Stickstoff. Die Zugabe der Additive erfolgt in der für das herzustellende Düngemittelgranulat erforderlichen Menge und in beliebiger Kombination der Additive während des Verfahrens, zweckmäßigerweise jedoch während der Herstellung der ersten Suspension und/oder während der Herstellung der zweiten Suspension. Bevorzugt erfolgt die Zugabe der Additive jedoch während der Herstellung der zweiten Suspension.

Zur Anreicherung mit Phosphor können der ersten und/oder der zweiten Suspension Phosphorquellen wie beispielsweise Apatit, Hydroxylapatit, Monocalciumphosphat (MCP), Diammoniumphosphat (DAP), Dicalciumphosphat (DCP), Tricalciumphospaht (TCP) oder Monoammoniumphoshat (MAP) oder Kaliumdihydrogenphosphat in beliebiger Menge oder Kombination zugeführt werden. Auch durch einen Aufschluss des auch als Suspensionsrückstand bezeichneten Raffinats in der zweiten Suspension mit Phosphorsäure kann eine Anreicherung mit Phosphor erzielt werden.

Eine Anreicherung mit Schwefel kann zweckmäßigerweise durch den Aufschluss des Raffinats mit Schwefelsäure in der zweiten Suspension erfolgen, d. h. in der Herstellungsphase. Darüber hinaus wird auch durch die Zugabe von bspw. Alkali- oder Erdalkalisulfaten zu der ersten und/oder zweiten Suspension eine Anreichung mit elementarem Schwefel und/oder einer Ammoniumsulfatlösung erreicht.

Eine Anreicherung des Düngemittelgranulates mit Stickstoff wird dadurch erreicht, dass das Raffinat in der Herstellungsphase mit Salpetersäure versetzt wird, bevorzugt bei der Herstellung der zweiten Suspension. Außerdem kann der ersten und/oder zweiten Suspension zur Anreicherung mit Stickstoff Harnstoff und/oder Ammoniumsulfat zugegeben werden. Der Vorteil von Ammoniumsulfat liegt darin, dass der Stickstoff als NH₄⁺ vorliegt, was zu einer besseren Pflanzenverfügbarkeit und/oder Versorgung der Pflanzen führt. Auch der im Ammoniumsulfat vorliegende Schwefel wird als Sulfat verbessert durch die Pflanzen aufgenommen.

Für die Herstellung eines NPK-Düngemittelgranulats ist die Zugabe von unterschiedlichen der vorgenannten Additive notwendig, zweckmäßigerweise insbesondere von Salpetersäure, Harnstoff, DCP und/oder Kaliumsalzen, wie Kaliumnitrat, Kaliumchlorid oder Kaliumdihydrogenphosphat.

Das Reaktionsmittel ist vorteilhafterweise eine Säure oder eine Lauge ist, wobei zweckmäßigerweise die Säure eine mineralische und/oder organische Säure oder eine beliebige Mischung aus diesen ist. Als Mineralsäuren werden die drei starken, anorganischen Säuren Salzsäure, Schwefelsäure und Salpetersäure, aber auch die Phosphorsäure und die Kohlensäure bezeichnet. Organische Säuren sind organische chemische Verbindungen, die über mindestens eine funktionelle Gruppe verfügen, die mit Wasser oder anderen protonierbaren Lösungsmitteln eine Gleichgewichtsreaktion eingeht, insbesondere beispielsweise Carbonsäuren. Diesbezüglich ist die organische Säure eine kurzkettige Carbonsäure mit einer Anzahl von bis zu sechs Kohlenstoffatomen, beispielsweise Ameisensäure, Essigsäure, Zitronensäure, Glykolsäure, Diglykolsäure sowie Mischungen daraus. Darüber hinaus weist die organische Säure bevorzugt ein Kohlenstoff-Sauerstoff-Verhältnis von 1:1 oder 1:2 auf.

Gemäß einer zusätzlichen vorteilhaften Weiterbildung wird der Ausgangsstoff vor und/oder die erste Suspension während der Aufbereitungsphase in einem Mahlschritt gemahlen. Bevorzugt wird das Raffinat vor und/oder während der Herstellungsphase in einem Mahlschritt gemahlen. Durch den vor der Granulation erfolgenden Mahlvorgang wird die Prozessstabilität gesteigert, indem durch den Mahlvorgang die Ausgangsstoffe und/oder das Raffinat zerkleinert werden. Hierdurch wird die Reaktionsteilnahme der Ausgangsstoffe und/oder des Raffinats auch durch die Vergrößerung der Oberfläche der Ausgangsstoffe und/oder Raffinats erhöht, d. h. die Reaktionskinetik wird erhöht, was die Reaktion zwischen den entsprechenden Reaktionspartnern beschleunigt, was wiederum zu einer gleichmäßigeren Umsetzung der Ausgangsstoffe und/oder des Raffinats und somit auch zu einer Zeitersparnis führt. Gleichzeitig wird zudem die Verstopfungsgefahr an Engstellen in der Vorrichtung, insbesondere in Düsen der Granulationseinrichtungen, an Klappen und Schiebern oder dergleichen, reduziert. Zudem wird eine auftretende Sedimentation durch den Mahlvorgang minimiert.

Weiter vorteilhaft ist, dass der Ausgangsstoff auch in einer Mahleinheit während der Aufbereitungsphase zerkleinerbar ist oder zerkleinert werden kann, bspw. in einer eine Mahleinheit aufweisenden Rezirkulationseinrichtung für die erste Suspension. Auch das Raffinat kann während der Herstellung der zweiten Suspension gemahlen werden, zweckmäßigerweise in einer eine Mahleinheit aufweisenden Rezirkulationseinrichtung für die zweite Suspension.

Überdies vorteilhaft ist es, wenn das Reaktionsmittel zum Beginn der Reaktion, d. h., wenn die Reaktionspartner zur zweiten Suspension vermischt werden, eine Temperatur von 10 °C bis 40 °C aufweist. Zweckmäßigerweise zersetzen sich bei diesen Temperaturen die organischen Säuren nicht. Darüber hinaus bilden sich bei Temperaturen des Reaktionsmittels von 10 °C bis 40 °C bei der Reaktion mit dem Raffinat weniger schwerlösliche Hochtemperaturphasen des Phosphats aus.

Ferner wird vorteilhafterweise das Reaktionsmittel vorgelegt und diesem das Raffinat zugegeben.

Nach einer bevorzugten Ausgestaltung des Verfahrens weist die erste Suspension eine Extraktionszeit von insbesondere bis zu 90 min und/oder die zweite Suspension eine Reaktionszeit von bis zu 90 min auf, bevorzugt zwischen 20 min und 60 min, auf. Mit Extraktionszeit wird der Zeitraum bezeichnet, in dem das Lösungsmittel mit dem Ausgangsstoff in Kontakt steht, um die insbesondere als Schwermetalle ausgebildeten Schadstoffe aus dem Ausgangsstoff in das Lösungsmittel herauszulösen. Die erste Suspension weist bevorzugt eine Extraktionszeit von insbesondere bis zu 90 min auf. Allerdings können auch deutlich längere Extraktionszeiten von Tagen und Wochen notwendig sein. In entsprechenden Fällen wird die erste Suspension dann in als Pufferspeichern ausgebildeten Behältern zwischengelagert. Mit Reaktionszeit wird der Zeitraum bezeichnet, in der das Raffinat mit dem Reaktionsmittel in Kontakt steht, um einen Aufschluss des auch als Suspensionsrückstand bezeichneten Raffinats zu erreichen und insbesondere die schwerlöslichen Phosphate in besser pflanzenverwertbare Phosphate umzuwandeln. Überraschenderweise hat sich herausgestellt, dass die vorgenannten Extraktions- und Reaktionszeiten, bevorzugt in einer beliebigen Kombination, dazu beiträgt, besser pflanzenverwertbare Düngemittelgranulate herzustellen.

Entsprechend einer Fortbildung herrscht während der Reaktionszeit eine Temperatur der zweiten Suspension zwischen 20 °C und 80 °C vor. Es wurde herausgefunden, dass diese Temperaturen für die Herstellung der zweiten Suspension und die dabei ablaufende Reaktion zwischen Raffinat und Reaktionsmittel besonders vorteilhaft sind, um die schwerlöslichen Phosphate aus dem Raffinat zu extrahieren.

Zweckmäßigerweise wird der ersten Suspension und/oder der zweiten Suspension mechanische Energie zum Aufbruch von Agglomeraten zugeführt, insbesondere mittels Ultraschall. Die Zufuhr der mechanischen Energie dient einer besseren Homogenisierung der ersten und/oder zweiten Suspension, insbesondere dem Aufbrechen von Agglomeraten, und somit zur Unterstützung des Aufschlusses des Raffinats in der Herstellungsphase und dadurch auch zur Reduktion der Reaktionszeit. Zweckmäßigerweise werden zum Einbringen von mechanischer Energie Hochdruckhomogenisierungsapparate, Plattenschwinger oder Sonotroden oder dergleichen eingesetzt. Die Homogenisierung führt zu einer Senkung der Viskosität und damit einer Erhöhung der Fließfähigkeit.

In einer bevorzugten Ausgestaltung weist die zweite Suspension einen Feststoffanteil von 30 % bis 70 % auf, insbesondere von 40 % bis 65 %. Überraschenderweise hat sich herausgestellt, dass ein Feststoffanteil von 30 % bis 70 % in der zweiten Suspension für die sich an die Herstellung der zweiten Suspension anschließende Granulation optimal ist, insbesondere im Hinblick auf eine Sprühgranulation oder eine Sprühagglomeration, und dadurch bedingt sehr gleichmäßige Düngemittelgranulate mit einer engen Korngrößenverteilung erzeugbar sind.

Vorteilhafterweise ist das Verfahren zur Herstellung von Düngemittelgranulat ein kontinuierliches Verfahren. Die Vorteile von kontinuierlichen Verfahren sind u. a. eine gleichbleibende Produktqualität, eine über Laufzeit bestimmbar Produktionsmenge an Düngemittelgranulat, ein weniger an manueller Handhabung der Düngemittelgranulate, verbesserte Arbeitssicherheit, weniger Personalbedarf, geringerer Reinigungsaufwand der Vorrichtung und geringere Produktionskosten der Düngemittelgranulate. Allerdings sind auch ein diskontinuierliches oder ein halbkontinuierliches Verfahren denkbar.

Die Aufgabe wird bei einer Vorrichtung der eingangs genannten Art dadurch gelöst, dass die Vorrichtung eine Aufbereitungseinheit mit einer Extraktionsstufe aufweist, die über einen Behälter zur Herstellung einer ersten Suspension aus dem Ausgangsstoff und einem Lösungsmittel verfügt, und mit einer Trenneinrichtung zur zumindest teilweisen Abtrennung des Extrakts aus der ersten Suspension zur Gewinnung eines Raffinats und, dass die Vorrichtung ferner über eine stromab der Aufbereitungseinheit angeordnete Herstellungseinheit verfügt, die eine Laugungseinrichtung mit einem Behälter zur Herstellung einer zweiten Suspension aus dem Raffinat und dem Reaktionsmittel und eine stromab der Laugungseinrichtung angeordnete Granulationseinrichtung zur Granulation der zweiten Suspension aufweist und wobei der Behälter zur Herstellung der ersten Suspension und der Behälter zur Herstellung der zweiten Suspension als separate Behälter ausgebildet sind, wobei die Granulationseinrichtung als Fluidisierungsapparat in Form eines Wirbelschichtapparates oder eines Strahlschichtapparates ausgebildet ist. Die Vorrichtung ist vorteilhafterweise geeignet das vorab beschriebene, bevorzugte Verfahren zur Herstellung von Düngemittelgranulaten diskontinuierlich, halbkontinuierlich oder kontinuierlich durchzuführen und so jeweils entsprechende Düngemittelgranulate herzustellen, die eine sehr geringe Schadstoffbelastung, bevorzugt in Form von Schwermetallen, aufweisen. Überraschenderweise verbleiben durch die in der Aufbereitungseinheit durchgeführte Aufbereitungsphase die Phosphate verbessert im Raffinat und können in der sich an die Aufbereitungsphase anschließende Herstellungsphase komplett in das Düngemittelgranulat umgesetzt werden. Vorteilhafterweise werden hierdurch die Düngemittelgranulate hergestellt, deren Eigenschaften, wie Korngröße, Feuchtegehalt usw., gezielt einstellbar. Hierbei wird die zweite Suspension insbesondere kontinuierlich granuliert Zweckmäßigerweise ist diese Vorrichtung sehr gut zur Durchführung des kontinuierlichen Verfahrens zur Herstellung von Düngemittelgranulat geeignet.

Zweckmäßigerweise weist die Aufbereitungseinheit mehrere Behälter zur Herstellung einer Suspension und eine oder mehrere Trenneinrichtungen zur zumindest teilweisen Abtrennung des Extrakts aus der entsprechenden Suspension auf, wobei den mehreren Behältern die eine Trenneinrichtung oder jedem Behälter eine separate Trenneinrichtung zugeordnet ist. Vorteilhafterweise werden durch die Trenneinrichtung Extrakt und Raffinat voneinander getrennt, wobei das Extrakt zumindest teilweise abgetrennt wird, sodass das Raffinat mit höherer Qualität, nämlich mit niedrigerer Schadstoffbelastung, weiterverarbeitet werden kann.

Nach einer weiteren bevorzugten Fortbildung der Vorrichtung verfügt die Aufbereitungseinheit über eine oder mehrere Regenerationseinrichtungen für das Extrakt. Dies ist vorteilhaft, da so das Extrakt regenerierbar und damit wiederverwendbar wird. Diesbezüglich weist die Aufbereitungseinheit eine oder mehrere Rezirkulationseinrichtungen für das regenerierte Extrakt auf. Hierdurch wird der Lösungsmittelverbrauch gesenkt und das Verfahren deutlich effizienter und kostensparender. Bevorzugt erfolgt die Regeneration des Extrakts mittels Ionenselektion oder Fällung oder Extraktion oder einem Schritt umfassend eine Verdampfung/Destillation. Besonders bevorzugt erfolgt die Fällung als Sulfidfällung durch Verwendung von Thiosulfat-Salzen. Die Sulfidfällung durch Verwendung von Thiosulfat-Salzen weist den Vorteil auf, dass das Entstehen von nur durch einen sehr großen Apparateaufwand wieder abreinigbaren Schwefelgasen verhindert wird.

Überdies verfügt die Herstellungseinheit in einer entsprechenden Weiterbildung über eine pH-Wert-Regeleinrichtung. Bevorzugt ist diese in der Herstellungseinheit stromauf des Granulators angeordnet. Durch eine pH-Wert Regelung mittels pH-Wert-Regeleinrichtung besteht die Möglichkeit den pH-Wert der sich aus Raffinat und Reaktionsmittel bildenden zweiten Suspension präzise einzustellen und bspw. nach der Reaktion aber vor der Granulation zu prüfen. Die Einstellung des pH-Werts der zweiten Suspension wirkt sich auf die Klebrigkeit der zweiten Suspension aus, die wiederum für das Verdüsen der zweiten Suspension mittels des bevorzugten als Fluidisierungsapparat ausgebildeten Granulators von sehr großer Bedeutung ist. Je saurer die Suspension, desto klebriger ist diese. Bevorzugt erfolgt die pH-Wert Messung in der zweiten Suspension und die Einstellung des pH-Wertes über die pH-Wert-Regeleinrichtung. Die pH-Wert Regelung kann auch als zusätzlicher, externer Regelkreis ausgebildet sein.

Gemäß einer zusätzlichen bevorzugten Ausgestaltung der Vorrichtung ist die Laugungseinrichtung, insbesondere der Behälter zur Herstellung der zweiten Suspension, als Rohrreaktor ausgebildet. Die Ausbildung als Rohrreaktor weist die Vorteile auf, dass diese Bauform einfach und kostengünstig realisierbar ist. Darüber hinaus weist der Rohrreaktor den Vorteil auf, dass gegenüber einem Rührkesselreaktor ein höherer Umsatz und eine höhere Selektivität erzielbar ist. Der Rohrreaktor verbindet somit die Vorteile des Batch-Reaktors (diskontinuierlicher Rührkesselreaktors) und des kontinuierlichen Rührkesselreaktors.

Nachfolgend wird die Erfindung anhand der beiliegenden Zeichnung näher erläutert und in dieser zeigen
- Figur 1: eine erste Ausführungsform der Vorrichtung zur Herstellung von Düngemittelgranulat,
- Figur 2: eine zweite Ausführungsform der Vorrichtung zur Herstellung von Düngemittelgranulat,
- Figur 3: eine dritte Ausführungsform der Vorrichtung zur Herstellung von Düngemittelgranulat,
- Figur 4: eine vierte Ausführungsform der Vorrichtung zur Herstellung von Düngemittelgranulat und
- Figur 5: eine fünfte Ausführungsform der Vorrichtung zur Herstellung von Düngemittelgranulat.

Sofern keine anderslautenden Angaben gemacht werden, bezieht sich die nachfolgende Beschreibung auf sämtliche in der Zeichnung illustrierten Ausführungsformen einer bevorzugten Vorrichtung 1 und dem entsprechenden Verfahren zur Herstellung von Düngemittelgranulat 43. Das Verfahren zur Herstellung von Düngemittelgranulat 43 ein ist hierbei bevorzugt als kontinuierliches Verfahren ausgebildet.

Die Vorrichtung 1 weist eine Aufbereitungseinheit 2 und eine Herstellungseinheit 3 auf. Nachfolgend wird zuerst die Aufbereitungseinheit 2 näher beschrieben:
Die Aufbereitungseinheit 2 verfügt über eine einen Behälter 4 zur Herstellung einer ersten Suspension 5 aus einem als Verbrennungsrückstand ausgebildeten, Schadstoffe 6 enthaltenden Ausgangsstoff 7 und einem Lösungsmittel 8 sowie eine Trenneinrichtung 9 aufweisende Extraktionsstufe 10.

Als Schadstoffe 6 enthaltender Ausgangsstoff 7 werden Verbrennungsrückstände bezeichnet, insbesondere aus der Mono- oder Mitverbrennung von Klärschlamm und/oder Tierausscheidungen und/oder Tiermehl und/oder Tierresten und/oder Tierkörpern und/oder Gülle und/oder Gärresten und/oder Holz und/oder Knochenmehl sowohl als Einzelstoff oder als Gemisch daraus.

Als Lösungsmittel 8 werden flüssige Verbindungen bezeichnet, die feste, flüssige und gasförmige Substanzen lösen können, ohne diese oder sich selbst chemisch zu verändern. Bei einem Lösevorgang wird die Gitterenergie der Verbindung aufgehoben. Dabei werden energetisch weniger fest gebundene Moleküle oder Ionen einer Verbindung durch das Lösungsmittel 8 herausgelöst, in Form einer Hülle abgefangen und stabilisiert. Ebenso müssen die inneren Kräfte der Lösungsmittelmoleküle überwunden werden. Die benötigte Energie wird aus der Anziehung zwischen den gelösten Schadstoffen 6 und dem Lösungsmittel 8 erhalten. Im Fall von Wasser bezeichnet man diesen Vorgang als Hydratisierung, bei anderen Lösungsmitteln 8 von Solvatisierung. Neben Wasser, das sich durch seine Fähigkeit zur dreidimensionalen Ausbildung von Wasserstoffbrücken auszeichnet, werden viele anorganische und organische Flüssigkeiten als Lösungsmittel 8 eingesetzt. Sie gehören zu den nichtwässrigen Systemen und werden nach ihrer Fähigkeit zur Abgabe von Protonen oder anderen Ionen und ihrer Polarität in die Kategorien protisch, aprotisch unpolar und aprotisch polar unterteilt. Darüber hinaus wird mit Lösungsmittel 8 auch beliebige Mischungen aus unterschiedlichen Lösungsmitteln 8 bezeichnet.

Der Behälter 4 weist einen Ausgangsstoffzulauf 11, einen Lösungsmittelzulauf 12 und einen Behälterablauf 13 auf. Des Weiteren kann der Behälter 4 eine Wärmeübertragungseinrichtung 14 umfassen, die geeignet ist dem die erste Suspension 5 aufweisenden Behälter 4 Wärme zu- oder abzuführen und so den Behälter 4 zu temperieren. Der Behälter 4 ist dementsprechend zweckmäßigerweise als Doppelmantelbehälter 15 ausgebildet. In dem Behälter 4 werden nach der Zugabe des den Schadstoff 6 enthaltenden Ausgangsstoffes 7 und des Lösungsmittels 8, während eines als Extraktionszeit bezeichneten Zeitraums, durch das Lösungsmittel 8 die Schadstoffe 6, insbesondere die Schwermetalle, aus dem Ausgangsstoff 7 der ersten Suspension 5 herausgelöst, wodurch sich die Schadstoffe 6 in dem Ausgangsstoff 7 ab- und im Lösungsmittel 8 anreichern. Weitere Schadstoffe 6 sind durch das Lösungsmittel 8 ebenfalls vom Ausgangsstoff 7 extrahierbar. Die Anreicherung des Lösungsmittels 8 erfolgt, bis die maximale Beladung des Lösungsmittels 8 erreicht ist. Die erste Suspension 5 weist bevorzugt eine Extraktionszeit von insbesondere bis zu 90 min auf. Allerdings können auch deutlich längere Extraktionszeiten von Tagen und Wochen notwendig sein, abhängig von eingesetzten Ausgangsstoff 7 und Lösungsmittel 8. In entsprechenden Fällen wird die erste Suspension 5 dann in nicht gezeigten als Pufferspeichern ausgebildeten Behältern zwischengelagert.

Um ein möglichst schnelles und vollständiges Herauslösen der insbesondere als Schwermetalle ausgebildeten Schadstoffe 6 aus dem Ausgangsstoff 7 zu erreichen, müssen dem Lösungsmittel 8 große Austauschflächen und kurze Diffusionswege geboten werden, d. h. die Kinetik der Extraktion wird beschleunigt. Das kann durch das Zerkleinern des die Schadstoffe 6 enthaltenden Ausgangsstoffes 7 mittels einer der Aufbereitungseinheit 2 zugeordneten Mahleinrichtung 16 erreicht werden, wodurch sich auch die Prozessstabilität steigert. Die optimierte Extraktionskinetik führt zu einer Zeitersparnis und somit zu einer kürzeren Extraktionszeit. Gleichzeitig wird zudem die Verstopfungsgefahr an Engstellen in der Vorrichtung 1, insbesondere an Ventilen, an Klappen und Schiebern oder dergleichen, reduziert.

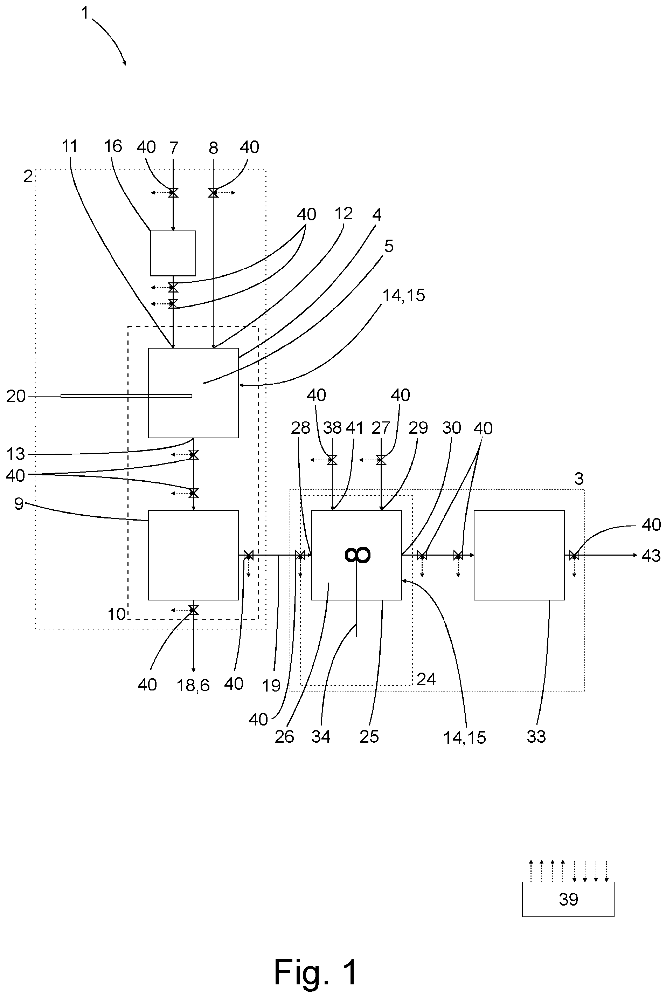

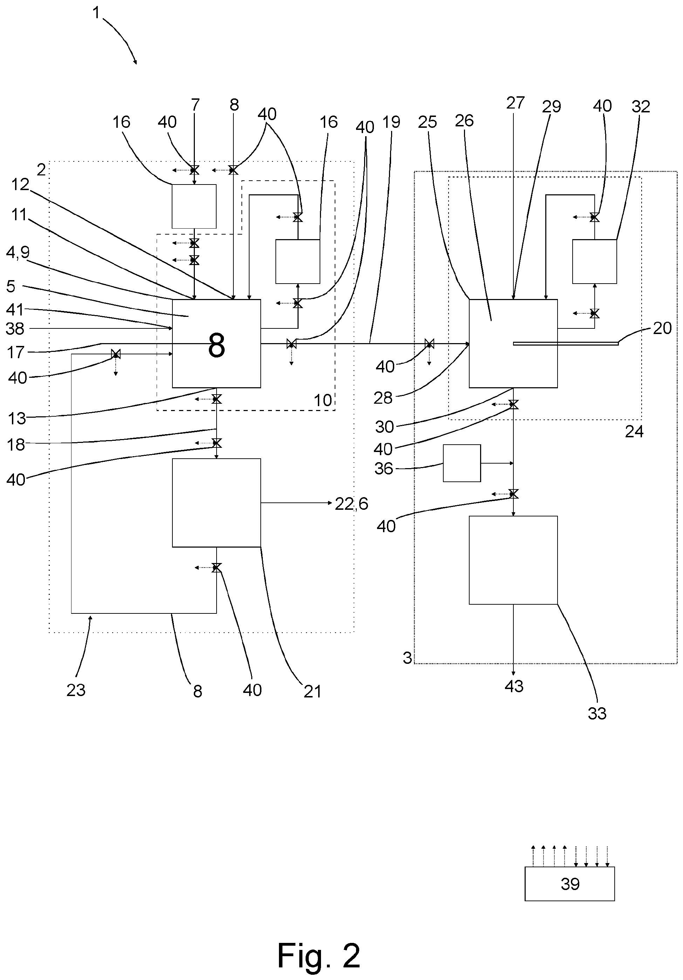

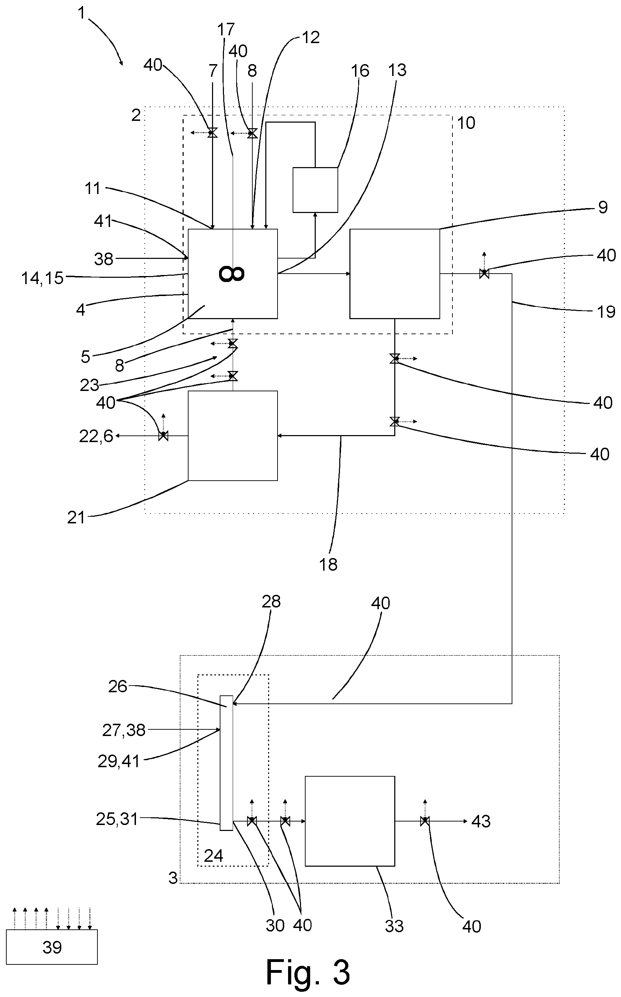

Die Mahleinrichtung kann vor und/oder an dem Behälter 4 zur Herstellung der ersten Suspension 5 angeordnet sein. In der Mahleinrichtung 16 werden die Ausgangsstoffe 7 zur Herstellung der ersten Suspension 5 zerkleinert, sodass diese einen durchschnittlichen Partikeldurchmesser von bevorzugt kleiner gleich 5 µm aufweisen. Wird der Mahlvorgang vor der Herstellung der ersten Suspension 5 vor (stromauf) dem Behälter 4 durchgeführt, erfolgt dieser als Trockenmahlung der Ausgangsstoffe 7, wie in insbesondere Fig. 1 dargestellt. Im Gegensatz hierzu wird eine Nassmahlung der Ausgangsstoffe 7 während der Herstellung der ersten Suspension 5 im Behälter 4 eingesetzt. Eine solche Nassmahlung mit anschließender Rückführung der ersten Suspension 5 in den Behälter 4 ist in bspw. Fig. 2 gezeigt. Bei einer Kombination von Trocken- und Nassmahlung im Verfahren findet der Mahlvorgang sowohl vor (stromauf) im Behälter 4 als auch während der Herstellung der ersten Suspension 5 im Behälter 4 statt, gezeigt in Fig. 3.

Durch den Einsatz der unterschiedlichen Mahlverfahren wird für den Anlagenbauer bei der Ausgestaltung des Verfahrens die Möglichkeit geschaffen auf die unterschiedlichen Ausgangsstoffe einzugehen und das Verfahren stets optimal an diese anzupassen und auf die Vorgaben, wie bspw. die Investitionskosten, der Betreiber einzugehen. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Ausgangsstoffe 7 frei und exakt einstellbar. Bei der Nassmahlung sind bei einem geringen spezifischen Energieverbrauch auch grobe Ausgangsstoffe verarbeitbar. Zudem weist die Rührwerkslagerung keine Produktberührung auf. Eine Kombination von Trocken- und Nassmahlung ermöglicht eine Nachmahlung der Ausgangsstoffe 7 und der ersten Suspension 5. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination von Trocken- und Nassmahlung den Einsatz von kontinuierlich und diskontinuierlich arbeitenden Mahleinrichtungen 16, wie bspw. Mühlen, möglich.

Bei der einfachsten Form des Herauslösens werden Ausgangsstoff 7 und Lösungsmittel 8 miteinander gut vermischt. Zweckmäßigerweise ist hierzu im Behälter 4 eine Mischeinrichtung 17 angeordnet, bspw. dargestellt in Fig. 2. Anschließend wird das Extrakt 18 mit den nun darin gelösten Schadstoffen 6 innerhalb einer der Extraktionsstufe 10 zugeordneten Trenneinrichtung 9 zumindest teilweise vom Raffinat 19 abgetrennt, wobei die Trenneinrichtung 9 einen Extrakt- und einen Raffinatablauf und einen Trenneinrichtungsablauf aufweist. Als Trenneinrichtung 9 werden zweckmäßigerweise Abscheider, Filtereinrichtungen, wie insbesondere Filterpressen, Zentrifugen oder dergleichen eingesetzt. In der in Fig. 2 dargestellten Ausführungsform sind Behälter 4 und Trenneinrichtung 9 als bauliche Einheit ausgebildet.

Zweckmäßigerweise wird der ersten Suspension 5 mechanische Energie zum Aufbruch von Agglomeraten zugeführt, insbesondere mittels Ultraschall. Die Zufuhr der mechanischen Energie erfolgt mittels Homogenisiereinrichtung 20 und dient einer besseren Homogenisierung der ersten Suspension 5, insbesondere dem Aufbrechen von Agglomeraten und dadurch auch zur Reduktion der Extraktionszeit, sowie einer Senkung der Viskosität und damit einer Erhöhung der Fließfähigkeit. Hierzu verfügt die Aufbereitungseinheit 2 über eine zum Einbringen von mechanischer Energie geeignete Homogenisiereinrichtung 20, insbesondere in Form eines Plattenschwingers oder einer Sonotrode, die am Behälter 4 angeordnet ist.

Ferner verfügt die Aufbereitungseinheit 2 über eine einen Extraktzulauf und einen Regenerationseinrichtungsablauf aufweisende Regenerationseinrichtung 21, wie insbesondere in Fig. 1 dargestellt. Die in der Regenerationseinrichtung 21 durchgeführte Regeneration des Extrakts 18 erfolgt meist durch eine Verdampfung/Destillation. Dabei wird das Lösungsmittel 8 verdampft und eine konzentrierte die Schadstoffe 6 enthaltenden Extraktlösung 22 bleibt zurück. Das Lösungsmittel 8 wird im Anschluss kondensiert und kann wiederverwendet werden. Auch die Extraktlösung 22 kann einer Weiterverarbeitung/Aufbereitung zugeführt werden.

Die Aufbereitungseinheit 2 weist hierfür eine Rezirkulationseinrichtung 23 auf, wie in Fig. 3 gezeigt. Die Rezirkulationseinrichtung 23 ist geeignet, das aus dem Extrakt 18 regenerierte Lösungsmittel 8 in den Behälter 4 einer Extraktionsstufe 10 zu rezirkulieren. Durch eine derartige Rezirkulation wird der ursprünglich benötigte Lösungsmittelverbrauch erheblich gesenkt, da durch die Zufuhr des regenerierten Lösungsmittels 8 weniger frisches Lösungsmittel 8 zugeführt werden muss.

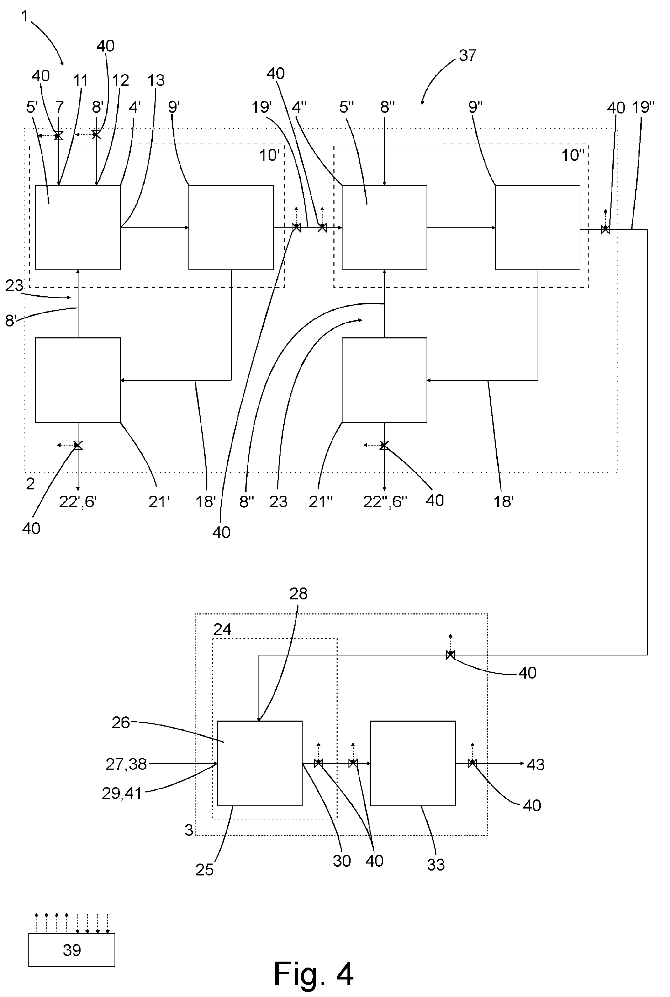

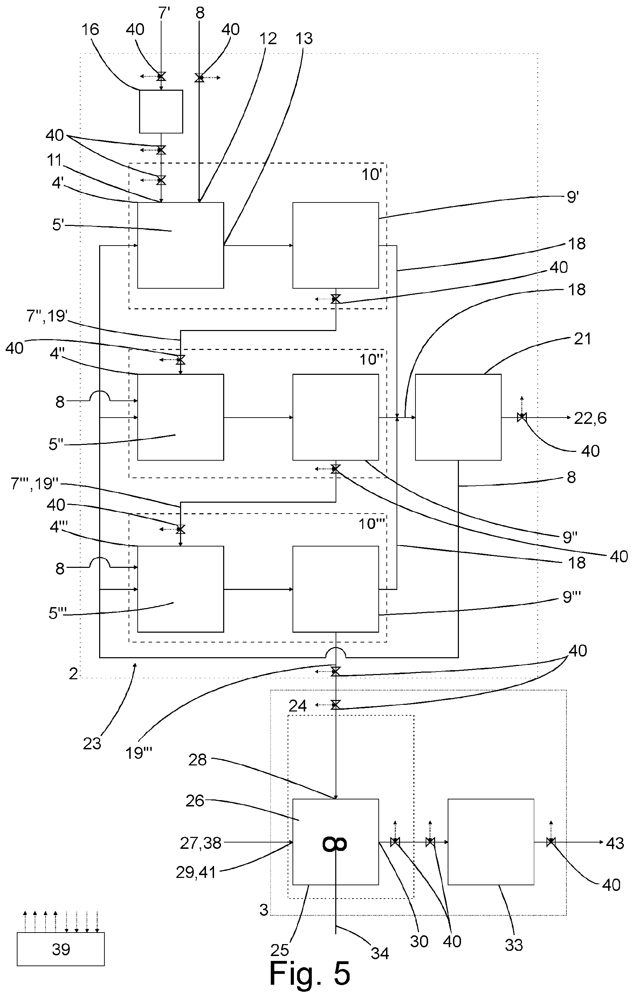

Die Aufbereitungseinheit 2 kann auch - wie bspw. in Fig. 4 und 5 dargestellt, über eine beliebige Anzahl an Extraktionsstufen 10 verfügen, die eine Aufbereitungskaskade 37 ausbilden. Fig. 4 zeigt eine Ausführungsform mit zwei Extraktionsstufen 10 und Fig. 5 eine Ausführungsform mit drei Extraktionsstufen 10. Zur besseren Unterscheidbarkeit der jeweils gleicher Gegenstände werden diese nachfolgend am Bezugszeichen mit ', '', ‴ usw. gekennzeichnet, bspw. bei der Extraktionsstufe 10', 10", 10‴. Eine Aufbereitungskaskade 37 kann dabei eine beliebige Anzahl an Extraktionsstufen 10 aufweisen, bspw. 2, 3, 4, ..., n. Jede Extraktionsstufe 10 bildet eine eigne Aufbereitungsphase aus.

In Fig. 4 ist jedem Behälter 4 eine Trenneinrichtung 9 zur zumindest teilweisen Abtrennung des Extrakts 18 aus der entsprechenden ersten Suspension 5, eine Regenerationseinrichtung 21 zur Regeneration des entsprechenden Extrakts 18 und eine Rezirkulationseinrichtung 23 zur Rezirkulation des regenerierten Lösungsmittels 8 zugeordnet. In der in Fig. 4 beschriebenen Ausführungsform der Vorrichtung 1 werden in den unterschiedlichen Extraktionsstufen 10 unterschiedliche Lösungsmittel 8, 8' eingesetzt.

Im Gegensatz hierzu ist in Fig. 5 den Behältern 4 zur Herstellung einer ersten Suspension 5 jeweils eine Trenneinrichtung 9 zugeordnet, wobei die Extrakte 18 über eine Sammeleinrichtung in der gemeinsamen Regenerationseinrichtung 21 regeneriert werden und das regenerierte Lösungsmittel 8 über eine gemeinsame Rezirkulationseinrichtung 23 rezirkuliert wird. In der Vorrichtung der Fig. 5 kommt ein gemeinsames Lösungsmittel 8 zum Einsatz. Hierbei wird die Aufbereitungsphase mit einem als Raffinat (19) ausbildeten Ausgangsstoff (7) zweimal wiederholt.

Das Raffinat 19 wird anschließend der Herstellungseinheit 3 zugeführt. Als Raffinat 19 wird hierbei der Teil der ersten Suspension 5 bezeichnet, der nach dem teilweisen Abtrennen des Extrakts 19 aus der ersten Suspension 5 als sogenannter Suspensionsrückstand zurückbleibt. Nachfolgend wird die Herstellungseinheit 3 näher beschrieben:
Die Herstellungseinheit 3 weist eine Laugungseinrichtung 24 auf, die über einen Behälter 25 zur Herstellung einer zweiten Suspension 26 aus Raffinat 18 und einem Reaktionsmittel 27 verfügt. Der Behälter 25 weist einen Raffinatzulauf 28, einen Reaktionsmittelzulauf 29 und einen Behälterablauf 30 auf. Des Weiteren kann der Behälter 25 eine Wärmeübertragungseinrichtung 14 umfassen, die geeignet ist den die zweite Suspension 26 aufweisenden Behälter 25 Wärme zu- oder abzuführen und so den Behälter 25 zu temperieren. Der Behälter 25 ist dementsprechend zweckmäßigerweise als Doppelmantelbehälter 15 ausgebildet. Eine entsprechende Ausführungsform ist bspw. in Fig. 1 dargestellt. In einer weiter bevorzugten Ausführungsform wird das Reaktionsmittel 27 im Behälter 25 vorgelegt und diesem wird das Raffinat 19 zugegeben. Weiter bevorzugt weist das Reaktionsmittel 27 bei der Zugabe über den Reaktionsmittelzulauf 29 eine Temperatur von 10 °C bis 40 °C auf. Die zweite Suspension 26 weist zweckmäßigerweise einen Feststoffanteil von 30 % bis 70 % auf, insbesondere von 40 % bis 65 %. Die Laugungseinrichtung 24, insbesondere der Behälter 25 zur Herstellung der zweiten Suspension 26, ist bevorzugt als Rohrreaktor 31 ausgebildet. Eine Ausgestaltung der Laugungseinheit 24 als Rohrreaktor 31 ist in Fig. 3 gezeigt. Durch das Reaktionsmittel 27 wird das Raffinat 19 in dem Behälter 25 durch Reaktion des Raffinats 19 mit dem Reaktionsmittel 27 aufgeschlossen, während eines als Reaktionszeit bezeichneten Zeitraums, sodass sich die schwerlöslichen Phosphate in besser pflanzenverwertbare Phosphate umwandeln. Die Reaktionszeit zwischen Raffinat 19 und Reaktionsmittel 27, insbesondere der Säure, beträgt zweckmäßigerweise bis zu 90 min. Während der Reaktionszeit steigt die Temperatur im Behälter 25 aufgrund der Reaktion zwischen Raffinat 19 und Reaktionsmittel 27 an, sodass die zweite Suspension 26 im Behälter 25 während der Reaktionszeit bevorzugt eine Temperatur zwischen 20 °C und 80 °C aufweist. Die Wärmeübertragungseinrichtung 14 ist geeignet, die Temperatur der zweiten Suspension 26 im Behälter 25 entsprechend einzuregeln.

Der Behälter 4 zur Herstellung der ersten Suspension 5 und der Behälter 25 zur Herstellung der zweiten Suspension 26 können, wie beispielhaft in Fig. 1 dargestellt, als separate Behälter 4, 25 ausgebildet sein. Im Gegensatz dazu ist es auch möglich, wie in einer nicht gezeigten Ausführungsform realisiert, dass der Behälter 4 zur Herstellung der ersten Suspension 5 und der Behälter 25 zur Herstellung der zweiten Suspension 26 als ein Behälter 4, 25 ausgebildet ist.

Als Reaktionsmittel 27 wird eine Säure oder eine Lauge bezeichnet, wobei zweckmäßigerweise die Säure eine mineralische und/oder eine organische Säure oder eine beliebige Mischung aus diesen ist. Als organische Säure werden bevorzugt kurzkettige Carbonsäuren mit einer Anzahl von bis zu sechs Kohlenstoffatomen eingesetzt, wie bspw. Ameisen-, Essig-, Zitronen-, Glykol, Diglykolsäure. Weiter bevorzugt weist die organische Säure ein Kohlenstoff-Sauerstoff-Verhältnis von 1:1 oder 1:2 auf. Die Temperatur des Reaktionsmittels 27 bei der Zugabe im Bereich 10 °C bis 40 °C reduziert insbesondere die Degeneration der Reaktionsmittel 27.

Der ersten Suspension 5 und/oder der zweiten Suspension 26 können Additive 38 zugeführt, wobei als Additive 38 insbesondere Phosphor, Schwefel und Stickstoff gelten. Die Zugabe der Additive 38 erfolgt in der für das herzustellende Düngemittelgranulat 43 erforderlichen Menge und in beliebiger Kombination der Additive 38 über einen Additivzulauf 41. Bevorzugt erfolgt die Zugabe der Additive 38 jedoch während der Herstellung der zweiten Suspension 26 im Behälter 25.

Zur Anreicherung mit Phosphor können der ersten und/oder der zweiten Suspension 5, 26 Phosphorquellen wie beispielsweise Apatit, Hydroxylapatit, Monocalciumphosphat (MCP), Diammoniumphosphat (DAP), Dicalciumphosphat (DCP), Tricalciumphospaht (TCP) oder Monoammoniumphoshat (MAP) oder Kaliumdihydrogenphosphat in beliebiger Menge oder Kombination zugeführt werden. Auch durch einen Aufschluss des auch als Suspensionsrückstand bezeichneten Raffinats 19 in der zweiten Suspension 26 mit Phosphorsäure als Reaktionsmittel 27 kann eine Anreicherung mit Phosphor erzielt werden.

Eine Anreicherung mit Schwefel kann zweckmäßigerweise durch den Aufschluss des Raffinats 19 mit Schwefelsäure als Reaktionsmittel 27 in der zweiten Suspension 26 erfolgen, d. h. in der in der Herstellungseinheit 3 durchgeführten Herstellungsphase. Darüber hinaus wird auch durch die Zugabe von bspw. Alkali- oder Erdalkalisulfaten zu der ersten und/oder zweiten Suspension 5, 26 eine Anreichung mit Schwefel, insbesondere elementarem Schwefel, erreicht. Auch die Verwendung von Ammoniumsulfat, bspw. in Lösung, ist sehr gut geeignet, um den Schwefelanteil entsprechend zu erhöhen.

Eine Anreicherung des Düngemittelgranulat 43es mit Stickstoff wird dadurch erreicht, dass das Raffinat 19 in der Herstellungsphase mit Salpetersäure als Reaktionsmittel 27 versetzt wird, bevorzugt bei der Herstellung der zweiten Suspension 26. Außerdem kann der ersten und/oder zweiten Suspension 5, 26 zur Anreicherung mit Stickstoff Harnstoff und/oder Ammoniumsulfat, zweckmäßigerweise in Lösung, zugegeben werden. Insbesondere im Ammoniumsulfat liegt der Stickstoff als NH4+ vor, was zu einer verbesserten Pflanzenverfügbarkeit und/oder einer verbesserten Versorgung der Pflanzen mit Stickstoff führt.

Für die Herstellung eines NPK-Düngemittelgranulat 43s ist die Zugabe von unterschiedlichen der vorgenannten Additive 38 notwendig, zweckmäßigerweise insbesondere von Salpetersäure, Harnstoff, DCP und/oder Kaliumsalzen, wie Kaliumnitrat, Kaliumchlorid oder Kaliumdihydrogenphosphat.

Für einen weiter verbesserten Ausschluss des Raffinats 19 müssen dem Reaktionsmittel 27 große Austauschflächen mit dem Raffinat 19 geboten werden, sodass die Reaktionskinetik beschleunigt wird. Das kann durch das Zerkleinern des Raffinats 19, falls notwendig, mittels einer Mahleinrichtung 32 erreicht werden. Auch die verbesserte Reaktionskinetik führt zu einer Zeitersparnis und somit zu einer kürzeren Reaktionszeit. Gleichzeitig wird zudem die Verstopfungsgefahr an Engstellen in der Vorrichtung 1, insbesondere an Düsen einer an die Laugungseinrichtung 24 anschließenden Granulationseinrichtung 33, reduziert.

Die Mahleinrichtung 32 kann vor (stromauf) und/oder an dem Behälter 25 zur Herstellung der zweiten Suspension 26 angeordnet sein. In der Mahleinrichtung 32 wird das Raffinat 19 zur Herstellung der zweiten Suspension 26 zerkleinert, sodass diese einem durchschnittlichen Partikeldurchmesser von bevorzugt kleiner gleich 5 µm, insbesondere zwischen 50 nm und 3 µm, aufweisen. Der Mahlvorgang erfolgt bevorzugt als Nassmahlung des Raffinats 19, wie in Fig. 3 gezeigt. Bei der Nassmahlung sind als Vorteile ein geringer spezifischer Energieverbrauch und auch die Verarbeitbarkeit groben Raffinats hervorzuheben. Zudem weist die Rührwerkslagerung keine Berührung mit der zweiten Suspension 26 auf.

Ideallerweise werden Raffinat 19 und Reaktionsmittel 27 im Behälter 25 miteinander gut vermischt. Zweckmäßigerweise ist hierzu im Behälter 25 eine Mischeinrichtung 34 angeordnet, die bevorzugt als Blatt- oder Bandmischer ausgebildet ist, siehe Fig. 1.

Zweckmäßigerweise wird auch der zweiten Suspension 26 mechanische Energie zum Aufbruch von Agglomeraten zugeführt, insbesondere mittels Ultraschall. Die Zufuhr der mechanischen Energie dient einer besseren Homogenisierung der zweiten Suspension 26 und dadurch auch zur Reduktion der Reaktionszeit, sowie einer Senkung der Viskosität und damit einer Erhöhung der Fließfähigkeit. Der Behälter 25 der Herstellungseinheit 3 weist zum Einbringen von mechanischer Energie eine Homogenisiereinrichtung 35 auf, insbesondere in Form eines Plattenschwingers oder einer Sonotrode. Eine solche im Behälter 25 angeordnete Homogenisierungseinrichtung 35 ist bspw. in Fig. 2 dargestellt.

Darüber hinaus verfügt die Herstellungseinheit 3 über eine einen als Einlass ausgebildeten Granulatorzulauf und einen als Auslass ausgebildeten Granulatorablauf aufweisende Granulationseinrichtung 33 zur Granulation der zweiten Suspension 26. Zweckmäßigerweise ist die Granulationseinrichtung 33 als Fluidisierungsapparat ausgebildet, insbesondere als Wirbelschicht- oder Strahlschichtapparat, sodass die zweite Suspension 26 mittels Sprühgranulation oder Sprühagglomeration granuliert wird. Das Verfahren wird bevorzugt so durchgeführt, dass die zweite Suspension 26 aus dem Behälter 25 kontinuierlich granuliert wird.

Zu Durchführung eines kontinuierlichen Verfahrens sind zweckmäßigerweise Pufferbehälter auszuführen, um die Ausgangsstoffe 7, das Lösungsmittel 8, das Raffinat 19 und das Reaktionsmittel 27, insbesondere aber die zweite Suspension 26 zu bevorraten. Diese Bevorratung kann im Fall von Teilausfällen helfen das Verfahren kontinuierlich weiter zu betreiben.

Überdies kann die Herstellungseinheit 3 über eine pH-Wert-Regeleinrichtung 36 verfügen. Bevorzugt ist diese in der Herstellungseinheit 3 stromauf der Granulationseinrichtung 33 angeordnet. Durch eine pH-Wert Regelung mittels pH-Wert-Regeleinrichtung 36, wie bspw. in Fig. 2 gezeigt, besteht die Möglichkeit den pH-Wert der sich aus Raffinat 19 und Reaktionsmittel 27 bildenden zweiten Suspension 26 einzustellen. Die Einstellung des pH-Werts der zweiten Suspension 26 wirkt sich auf die Klebrigkeit der zweiten Suspension 26 aus, die wiederum für das Verdüsen der zweiten Suspension 26 mittels der Granulationseinrichtung 33 von sehr großer Bedeutung ist. Je saurer die Suspension, desto klebriger ist diese. Bevorzugt erfolgt pH-Wert Messung und die Zudosierung der den pH-Wert einstellenden zusätzlichen Säure oder Lauge in dem Behälter 25, der die zweite Suspension 26 aufweist. Die Einstellung des pH-Wertes erfolgt hierbei über die pH-Wert-Regeleinrichtung 36. Die pH-Wert Regelung kann auch als zusätzlicher, externer Regelkreis ausgebildet sein.

Die Vorrichtung 1 zur Herstellung von Düngemittelgranulat 43 43 wird bevorzugt mit einer Steuerungseinrichtung 39 geregelt und/oder gesteuert. Zweckmäßigerweise sind hierzu in allen Zu- und Abläufen der jeweiligen Einrichtungen, wie Behälter 4, 25, Trenneinrichtung 8, Regenerationseinrichtung 21, Rezirkulationseinrichtung 23, Granulationseinrichtung 33 usw. Regelventile 40 verbaut, die von der Steuerungseinrichtung 39 regel- und/oder steuerbar sind. Auch die vorgenannten einzelnen Einrichtungen der Vorrichtung 1 sind alle regel- und/oder steuerbar.

## Patentansprüche

1. Vorrichtung (1) zur Herstellung von Düngemittelgranulat (43) aus einem aufbereiteten als Verbrennungsrückstand ausgebildeten Ausgangsstoff (7) und einem Reaktionsmittel (27) mittels Granulation, **dadurch gekennzeichnet, dass** die Vorrichtung (1) eine Aufbereitungseinheit (2) mit einer Extraktionsstufe (10) aufweist, die über einen Behälter (4) zur Herstellung einer ersten Suspension (5) aus dem Ausgangsstoff (7) und einem Lösungsmittel (8) verfügt, und mit einer Trenneinrichtung (9) zur zumindest teilweisen Abtrennung des Extrakts (18) aus der ersten Suspension (5) zur Gewinnung eines Raffinats (19) und, dass die Vorrichtung (1) ferner über eine stromab der Aufbereitungseinheit (2) angeordnete Herstellungseinheit (3) verfügt, die eine Laugungseinrichtung (24) mit einem Behälter (25) zur Herstellung einer zweiten Suspension (26) aus dem Raffinat (19) und dem Reaktionsmittel (27) und eine stromab der Laugungseinrichtung (24) angeordnete Granulationseinrichtung (33) zur Granulation der zweiten Suspension (26) aufweist und wobei der Behälter (4) zur Herstellung der ersten Suspension (5) und der Behälter (25) zur Herstellung der zweiten Suspension (26) als separate Behälter (4, 25) ausgebildet sind, wobei die Granulationseinrichtung als Fluidisierungsapparat in Form eines Wirbelschichtapparates oder eines Strahlschichtapparates ausgebildet ist.

2. Vorrichtung (1) nach Anspruch 1, **dadurch gekennzeichnet, dass** die Aufbereitungseinheit (2) mehrere Behälter (4) zur Herstellung einer Suspension (5) und eine oder mehrere Trenneinrichtungen (9) zur zumindest teilweisen Abtrennung des Extrakts (18) aus der entsprechenden Suspension (5) aufweist, wobei den mehreren Behältern (4) die eine Trenneinrichtung (9) oder jedem Behälter (4) eine separate Trenneinrichtung (9) zugeordnet ist.

3. Vorrichtung (1) nach Anspruch 1 oder 2, **dadurch gekennzeichnet, dass** die Aufbereitungseinheit (2) über eine oder mehrere Regenerationseinrichtungen (21) für das Extrakt (18) verfügt.

4. Vorrichtung (1) nach einem der vorhergehenden Ansprüche, **dadurch gekennzeichnet, dass** die Aufbereitungseinheit (2) eine oder mehrere Rezirkulationseinrichtungen (23) für das regenerierte Lösungsmittel (8) aufweist.

5. Vorrichtung (1) nach einem der vorhergehenden Ansprüche, **dadurch gekennzeichnet, dass** die Herstellungseinheit (3) über eine pH-Wert-Regeleinrichtung (36) verfügt.

6. Vorrichtung (1) nach einem der vorhergehenden Ansprüche, **dadurch gekennzeichnet, dass** die Laugungseinrichtung (24), insbesondere der Behälter (25) zur Herstellung der zweiten Suspension (26), als Rohrreaktor (31) ausgebildet ist.
